(19) Europäisches Patentamt / European Patent Office / Office européen des brevets

(11) **EP 3 325 321 B1**

(12) **FASCICULE DE BREVET EUROPEEN**

(45) Date de publication et mention de la délivrance du brevet:
**06.08.2025 Bulletin 2025/32**

(21) Numéro de dépôt: **16736806.7**

(22) Date de dépôt: **22.06.2016**

(51) Classification Internationale des Brevets (IPC):
**B60W 10/06** *(2006.01)*    **B60W 10/08** *(2006.01)*
**B60W 10/10** *(2012.01)*    **B60W 20/00** *(2016.01)*

(52) Classification Coopérative des Brevets (CPC):
**B60W 20/00; B60K 6/48; B60W 10/06;**
**B60W 10/08; B60W 10/10; B60W 20/11;**
**B60W 20/16;** B60W 2050/0039; B60W 2510/244;
B60W 2710/0666; B60W 2710/083;
B60W 2710/1005; Y02T 10/62; Y02T 10/70

(86) Numéro de dépôt international:
**PCT/EP2016/064390**

(87) Numéro de publication internationale:
**WO 2017/016759 (02.02.2017 Gazette 2017/05)**

(54) **PROCÉDÉ ET SYSTÈME DE COMMANDE D'UN SYSTÈME DE PROPULSION HYBRIDE OPTIMISANT LA CONSOMMATION DE CARBURANT ET LES ÉMISSIONS POLLUANTES, PRODUIT PROGRAMME D'ORDINATEUR, SYSTÈME DE PROPULSION HYBRIDE ET VÉHICULE**

VERFAHREN UND SYSTEM ZUR STEUERUNG EINES HYBRIDANTRIEBSSYSTEMS, OPTIMIERUNG DES KRAFTSTOFFVERBRAUCHS UND DER SCHADSTOFFEMISSIONEN, COMPUTERPROGRAMMPRODUKT, HYBRIDANTRIEBSSYSTEM, SOWIE FAHRZEUG

METHOD AND SYSTEM FOR CONTROLLING A HYBRID PROPULSION SYSTEM, OPTIMISING FUEL CONSUMPTION AND POLLUTING EMISSIONS, COMPUTER PROGRAM PRODUCT, HYBRID PROPULSION SYSTEM AND VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2015 FR 1557069**

(43) Date de publication de la demande:
**30.05.2018 Bulletin 2018/22**

(73) Titulaire: **IFP Energies nouvelles**
**92500 Rueil-Malmaison (FR)**

(72) Inventeurs:
• **THIBAULT, Laurent**
  **92400 Courbevoie (FR)**
• **GRONDIN, Olivier**
  **92270 Bois-Colombes (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
| | |
|---|---|
| EP-A1- 1 777 384 | EP-A1- 1 777 384 |
| EP-A2- 2 055 585 | EP-A2- 2 055 585 |
| DE-A1- 102006 036 443 | DE-A1- 102006 036 443 |
| DE-A1- 102007 019 989 | DE-A1- 102007 019 989 |
| DE-A1- 19 836 955 | DE-A1- 19 836 955 |
| FR-A1- 3 008 943 | FR-A1- 3 008 943 |
| GB-A- 2 483 371 | GB-A- 2 483 371 |
| US-A1- 2013 184 913 | |

## Description

La présente invention concerne le domaine du contrôle moteur et plus particulièrement le contrôle d'un système de propulsion hybride d'un véhicule, dans le but de réduire les émissions polluantes.

Un véhicule hybride est un véhicule comprenant au moins une machine électrique et un moteur thermique pour assurer la traction du véhicule.

La réduction des émissions d'oxydes d'azote (NOx) est un enjeu majeur du développement des motorisations, notamment des motorisations diesel. Les seuils d'homologation drastiques conduisent à l'utilisation de systèmes de post-traitement des gaz d'échappement très coûteux. Dans ce contexte, l'hybridation diesel est intéressante économiquement à condition de permettre la réduction des émissions de NOx à la source. L'ajout d'un moteur électrique apporte, en effet, un degré de liberté dans le choix des points de fonctionnement du moteur thermique. Des points intéressants en terme de consommation de carburant et d'émissions de NOx peuvent donc être privilégiés. La taille, et donc le coût du post-traitement peuvent alors être réduits, compensant ainsi le surcoût de l'hybridation. En prime, la consommation de carburant est également significativement abaissée, notamment grâce à la récupération d'énergie, tel que le freinage récupératif.

La supervision énergétique est donc un élément clé du développement des systèmes de propulsion hybride diesel. Elle s'avère plus complexe que dans le cas essence, où la prise en compte de la consommation et de la température du catalyseur suffit. Pour une motorisation hybride diesel, une des problématiques est de trouver un compromis entre les émissions de NOx et la consommation de carburant.

De plus, la température du système de post-traitement doit être prise en compte dans la supervision énergétique. En effet, minimiser les émissions de NOx en sortie moteur n'est pas suffisant car il faut prendre en compte l'efficacité du système de post-traitement qui a un impact majeur sur les émissions polluantes rejetées dans l'atmosphère. En effet selon la température du post-traitement, son efficacité peut passer du tout au rien. Il est donc capital d'optimiser la mise en action du post-traitement et de le maintenir à une température suffisante au cours du roulage. Une stratégie qui se contenterait de minimiser les émissions en sortie du moteur thermique sans prise en compte du post-traitement n'est pas forcément intéressante en termes de réduction des émissions de NOx à l'échappement car les gains obtenus en sortie moteur peuvent être compensés (et dépassés) par une diminution de l'efficacité du post-traitement

On peut distinguer deux grandes familles de lois de gestion d'énergie pour véhicule hybride.

La première famille utilise des techniques heuristiques, basées sur l'expérience de leur concepteur qui fixe des règles arbitraires. Ces lois heuristiques ont été rapidement adoptées par les industriels en raison de leur facilité d'implémentation et de leur robustesse. Les documents suivants illustrent des exemples de stratégies heuristiques permettant une réduction des émissions de NOx pour des véhicules hybride Diesel :

- D. Ambuhl, A. Sciarretta, C. Onder, L. Guzzella, S. Sterzing, K. Mann, D. Kraft, et M. Küsell, A causal operation strategy for hybrid electric vehicles based on optimal control theory. In Proceedings of the 4th Symposium on Hybrid Vehicles and Energy Management, 2007.
- N. Lindenkamp, C.-P. Stöber-Schmidt & P. Eilts, Strategies for Reducing NOx and Particulate Matter Emissions in Diesel Hybrid Electric Vehicles, SAE Paper n°2009-01-1305, 2009.

Cependant, les approches heuristiques présentent deux inconvénients majeurs : tout d'abord, elles ne garantissent pas l'optimalité de la solution proposée, ensuite, elles sont spécifiques à une application donnée et nécessitent donc un travail de calibration important chaque fois qu'il faut les déployer sur une nouvelle application.

A l'inverse, la deuxième famille concerne des approches de contrôle « model-based » (basé sur des modèles) qui permettent de garantir la qualité de la solution obtenue à la précision du modèle près et, une fois développées, elles sont facilement réutilisables sur diverses applications véhicule, puisqu'il suffit alors de mettre à jour les paramètres physiques qui diffèrent. De telles approches « model-based », basées sur la théorie de la commande optimale ont donc été largement utilisées pour résoudre le problème de supervision énergétique des véhicules hybrides. Les documents suivants illustrent de telles méthodes :

- A. Sciarretta, L. Guzzella, "Control of hybrid electric vehicles. Optimal energy-management strategies", Control Systems Magazine, vol. 27, no. 2, April 2007, pp. 60-70.
- R. Cipollone, A. Sciarretta, "Analysis of the potential performance of a combined hybrid vehicle with optimal supervisory control", Proc. of the IEEE International Conference on Control Applications, Munich, Germany, October 4-6, 2006 (invited paper).
- J. Liu, H. Peng, "Control optimization for a power-split hybrid vehicle", in Proc. of the American Control Conference, 2006

Initialement, la plupart de ces publications se limitaient à l'optimisation de la consommation de carburant.

Cependant, ce critère n'est pas suffisant et de telles stratégies peuvent conduire à une augmentation significative des émissions polluantes, en particulier des émissions de NOx. Une méthode de prise en compte des émissions en sortie du moteur a été proposée dans la demande de brevet FR 2 982 824 (US 2013/0131956) et dans le document :

- O. Grondin, L.Thibault, et C. Querel- Transient Torque Control of a Diesel Hybrid Powertrain for NOx limitation, Engine and Powertrain Control, Simulation and Modeling, Volume #3 2012

Cette approche, bien que validée expérimentalement, ne permet toutefois pas de contrôler les émissions polluantes à l'échappement (en sortie du système de post-traitement). Dans certains cas, cette approche peut dégrader les émissions polluantes à l'échappement : pour minimiser les NOx en sortie du moteur thermique, ce type de stratégie a tendance à réduire la charge des points de fonctionnement du moteur thermique, ce qui diminue la production d'enthalpie à l'échappement et peut empêcher le système de post-traitement d'atteindre sa température d'activation. Cela s'avère très problématique dans la mesure où les seules émissions qui comptent, sont celles qui se dégagent dans l'atmosphère à l'échappement, et non celles directement à la sortie du moteur thermique.

La prise en compte de la thermique post-traitement au sein d'une supervision énergétique basée sur une commande optimale a été présentée dans le document :

- A. Chasse, G. Corde, A. Del Mastro, and F. Perez, "Online optimal control of a parallel hybrid with after-treatment constraint integration," in Proceedings of the IEEE Vehicle Power and Propulsion Conference, 2010.

Cette commande concerne une application essence. Le critère de minimisation utilisé dans cette étude prend en compte la consommation de carburant, l'optimisation de la thermique d'échappement étant assurée par la prise en compte de la température du post-traitement comme état au sein du problème d'optimisation. Une telle approche est efficace pour optimiser la consommation rapidement et accélérer la mise en action du post-traitement. Cependant, elle ne considère pas directement les émissions polluantes, et en conséquence, elle peut entrainer leur hausse, notamment sur des applications Diesel.

La demande de brevet GB 2483371 A décrit un procédé de commande d'un système de propulsion hybride d'un véhicule permettant notamment de réduire la consommation du véhicule ainsi que les émissions polluantes.

La demande de brevet EP 2055585 A2 décrit un procédé de contrôle d'un véhicule hybride prenant en compte la température des machines électriques.

Le document US 2013/184913 A1 divulgue un procédé d'optimisation de la consommation et des émissions polluantes d'un véhicule hybride, utilisant une fonction coût.

L'objet de l'invention concerne un procédé de commande d'un système de propulsion hybride d'un véhicule, dans lequel on définit une commande (couples et/ou état de la chaîne cinématique) qui minimise la consommation et les émissions polluantes en sortie du système de post-traitement. Le procédé de commande est basé sur une minimisation d'une fonction coût d'un modèle du système de propulsion. Ainsi, le procédé selon l'invention permet de minimiser simultanément la consommation de carburant, et les émissions polluantes, en prenant en compte l'efficacité du système de post-traitement. De plus, le procédé de commande selon l'invention permet, au moyen du modèle, d'intégrer les phénomènes physiques mis en œuvre par le système de propulsion hybride.

**Le procédé selon l'invention**

L'invention concerne un procédé de commande selon la revendication 1, un produit programme d'ordinateur selon la revendication 10, un système de propulsion hybride selon la revendication 11 et un véhicule selon la revendication 12.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre schématiquement les étapes du procédé selon l'invention.
La figure 2 illustre un premier mode de réalisation du procédé selon l'invention.
La figure 3 illustre un deuxième mode de réalisation du procédé selon l'invention.
La figure 4 illustre un exemple de système de propulsion hybride.
La figure 5 représente une courbe comparant la température du post traitement mesurée à la température du post-traitement estimée en fonction du temps.
La figure 6 illustre, pour un exemple, des courbes comparatives de la vitesse du véhicule pour deux procédés de commande selon l'art antérieur, et pour un mode de réalisation selon l'invention.

La figure 7 illustre, pour le même exemple, des courbes comparatives de l'état de charge de la batterie pour deux procédés de commande selon l'art antérieur, et pour un mode de réalisation selon l'invention.

La figure 8 illustre, pour le même exemple, des courbes comparatives du cumul des émissions de NOx en sortie du moteur pour deux procédés de commande selon l'art antérieur, et pour un mode de réalisation selon l'invention.

La figure 9 illustre, pour le même exemple, des courbes comparatives du cumul des émissions de NOx en sortie du système de post-traitement pour deux procédés de commande selon l'art antérieur, et pour un mode de réalisation selon l'invention.

La figure 10 illustre, pour le même exemple, des courbes comparatives de la température du système de post-traitement pour deux procédés de commande selon l'art antérieur, et pour un mode de réalisation selon l'invention.

La figure 11 illustre, pour le même exemple, des courbes comparatives de l'efficacité du système de post-traitement pour deux procédés de commande selon l'art antérieur, et pour un mode de réalisation selon l'invention.

## Description détaillée de l'invention

Le procédé selon l'invention permet de réduire la consommation de carburant et les émissions de NOx en sortie du système de post-traitement pour un système de propulsion hybride.

Selon l'invention, le procédé permet la commande d'un système de propulsion hybride d'un véhicule, notamment automobile, comprenant au moins une machine électrique et au moins un moteur thermique (Diesel ou essence). La machine électrique est alimentée par un système de stockage d'énergie électrique. Le terme système de stockage d'énergie électrique regroupe tout moyen de stockage d'énergie électrique tels que batterie, accumulateur, pack, modules, super-condensateurs.... Dans la suite de la description, le terme batterie est utilisé pour désigner l'un quelconque des moyens de stockage d'énergie électrique. Le système de propulsion hybride comporte en outre une chaîne cinématique pour coupler le moteur thermique et la machine électrique. Il peut s'agir d'une chaîne cinématique en série ou en parallèle ou mixte série/parallèle. La chaîne cinématique peut comporter des moyens de réduction, tels qu'une boîte de vitesses, des réducteurs..., des moyens d'accouplement, tels que des embrayages... Le système de propulsion hybride comporte en outre un système de post-traitement des émissions polluantes (notamment des NOx) du moteur thermique. Les systèmes les plus usuels de réduction des NOx sont la recirculation des gaz d'échappement et la réduction catalytique sélective. De plus, un filtre à particules peut être utilisé pour les hydrocarbures HC, le monoxyde de carbone CO et les particules fines.

Pour le procédé selon l'invention, les étapes suivantes sont réalisées :

- acquisition d'une consigne de couple du système de propulsion $TPT_{sp}$ ;

- discrétisation d'au moins une partie de l'ensemble des commandes admissibles par le système de propulsion, permettant d'atteindre la consigne de couple du système de propulsion ;

- construction d'un modèle du système de propulsion qui relie une fonction coût à une commande du système de propulsion, la fonction coût étant une fonction de la consommation du système de propulsion et des émissions polluantes en sortie du système de post-traitement ;

- détermination d'une commande du système de propulsion par minimisation de la fonction coût pour les commandes admissibles discrétisées ; et

- application de la commande au système de propulsion.

Selon l'invention, la commande déterminée peut être une consigne de couple du moteur thermique $T_{eng\_sp}$ et/ou une consigne de couple de la machine électrique $T_{mot\_sp}$ et/ou une consigne de commande de la chaîne cinématique $ECC_{sp}$, par exemple une consigne de commande du rapport de la boîte de vitesse de la chaîne cinématique.

La consigne de couple du système de propulsion $TPT_{sp}$ correspond à la demande de couple à roue par le conducteur.

Le procédé de commande selon l'invention est réalisé en ligne, en temps réel. Ainsi, elle détermine la commande sans connaître à l'avance le parcours du véhicule.

Notations

Dans la suite de la description, on utilise les notations suivantes :

| | | |
|---|---|---|
| $N_e$ | Régime du moteur thermique | [tr/min] |
| SOC | Etat de charge de la batterie | [%] |
| $TPT_{sp}$ | Consigne de couple à la roue conducteur brute (non filtrée) | [Nm] |
| $TPT_{flt\_sp}$ | Consigne de couple à la roue conducteur filtrée | [Nm] |
| $v_{adm}$ | Vecteur des commandes admissibles | [-] |
| $T_{eng}$ | Couple du moteur thermique | [Nm] |
| $T_{eng\_v}$ | Vecteur des couples du moteur thermique admissibles | [Nm] |
| $T_{eng\_sp}$ | Consigne de couple du moteur thermique | [Nm] |
| $T_{mot}$ | Couple de la machine électrique | [Nm] |
| $T_{mot\_sp}$ | Consigne de couple de la machine électrique | [Nm] |
| $V_{veh}$ | Vitesse véhicule | [km/h] |
| ECC | Etat de la chaîne cinématique à l'instant t | [-] |
| $ECC_{sp}$ | Consigne de l'état de la chaîne cinématique | [-] |
| $ECC_v$ | Vecteur des états de chaîne cinématique admissibles | [-] |
| $H_v$ | Vecteur des Hamiltonien (Fonction coût) | [équivalent W] |
| $\eta_{AT}$ | Efficacité du système de post-traitement | [-] |
| $T_{AT}$ | Température du système de post-traitement | [°C] |
| $T_{AT\ QS}$ | Température du système de post-traitement en régime permanent | [°C] |
| $C_{nom}$ | Capacité nominale de la batterie (ou équivalent) | [C] |
| OCV | Tension à vide de la batterie (ou équivalent) | [V] |
| DCR | Résistance interne de la batterie (ou équivalent) | [Ω] |
| $\lambda$ | Multiplicateur de Lagrange | [-] |
| $u_1$ | Commande de couple du moteur thermique | [Nm] |
| $u_2$ | Commande de l'état de la chaîne cinématique | [-] |
| x | Etat de charge de la batterie | [%] |
| $\alpha$ | Variable de calibration | [-] |
| $m_f$ | Consommation de carburant du moteur thermique | [kg/h] |
| $m_{NO_x\ TP}$ | Emissions de NOx en sortie du système de post-traitement | [g/h] |
| $m_{NO_x\ EO}$ | Emissions de NOx en sortie du moteur thermique | [g/h] |
| l | Inertie thermique équivalent du système de post-traitement | [W/K] |
| $k_1$ | Résistance thermique des échanges avec l'extérieur | [W/K] |
| $k_2$ | Résistance thermique des échanges avec les gaz d'échappement | [W/K] |
| $\Delta t$ | Intervalle de temps | [s] |
| R1 | Rapport de réduction du réducteur couplé à la machine électrique | [-] |
| RBV | Rapport de la boîte de vitesse couplée au moteur thermique | [-] |
| Pelec | Puissance de l'onduleur alimentant la machine électrique | [W] |
| $\lambda_{sp}$ | Variable de calibration | [-] |
| $K_p$ | Variable de calibration | [-] |

La dérivée par rapport au temps est indiquée par un point au-dessus de la variable.

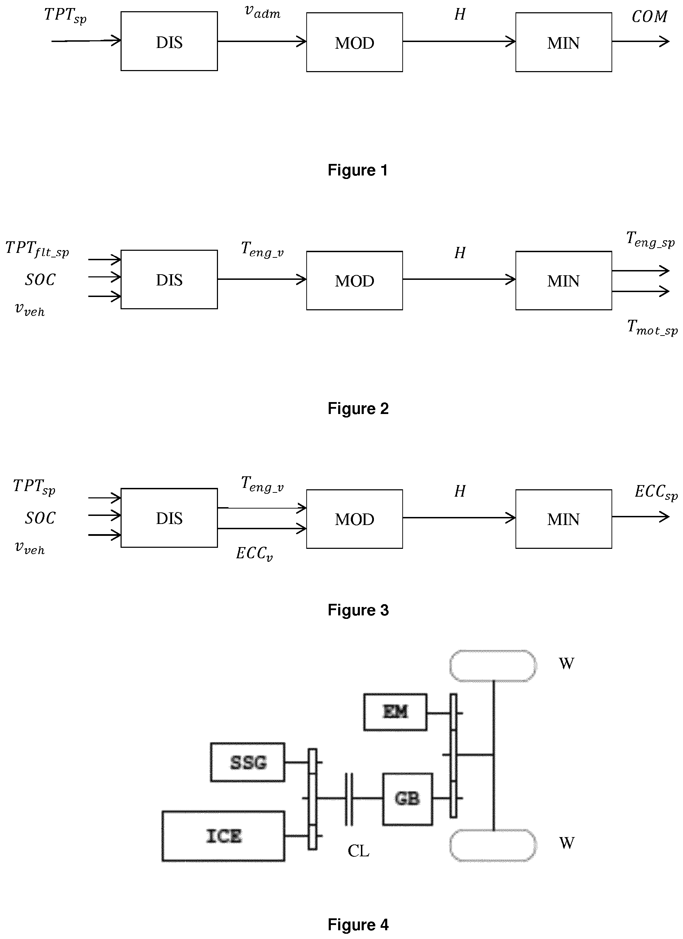

La figure 1 illustre les différentes étapes du procédé selon l'invention :

-  acquisition d'une consigne de couple du système de propulsion $TPT_{sp}$ ;
-  discrétisation DIS d'au moins une partie de l'ensemble des commandes admissibles $v_{adm}$ par le système de propulsion, permettant d'atteindre la consigne de couple $TPT_{sp}$ du système de propulsion ;
-  construction d'un modèle MOD du système de propulsion qui relie une fonction coût H à une commande du système de propulsion, la fonction coût H étant une fonction de la consommation du système de propulsion et des émissions polluantes en sortie du système de post-traitement ;
-  détermination d'une commande COM du système de propulsion par minimisation de la fonction coût pour les commandes admissibles $v_{adm}$ discrétisées.

1) Discrétisation

Lors de cette étape, on discrétise l'ensemble des commandes admissibles, permettant d'obtenir la consigne de couple $TPT_{sp}$ du système de propulsion hybride. La discrétisation consiste à réaliser un maillage de l'ensemble des solutions de commandes admissibles. Le pas de ce maillage peut être choisi selon un compromis entre la précision de la solution (maillage fin) et l'accélération du temps de calcul (maillage grossier).

Une méthode de discrétisation pouvant être utilisée consiste à réaliser un maillage régulier. Cela signifie que le pas du maillage, c'est-à-dire l'écart entre deux éléments, est constant. Dans ce cas, chaque élément du vecteur de commande admissible est obtenu par les équations suivantes :

$$v_{adm}(i) = T_{eng_{mini}} + \epsilon * (i - 1)$$

Où $\epsilon$, le pas du maillage est simplement obtenu en fixant le nombre d'éléments du maillage N (par exemple, on peut choisir N=10, qui est un ordre de grandeur permettant de réaliser un bon compromis entre précision et rapidité). Par exemple :

$$\epsilon = \frac{T_{eng_{max}} - T_{eng_{min}}}{N - 1}$$

avec $T_{eng_{max}}$ le couple maximum admissible du moteur thermique permettant d'atteindre la consigne de couple , et $T_{eng_{min}}$ le couple minimum admissible du moteur thermique permettant d'atteindre la consigne de couple.

Lors de cette étape, on détermine donc un vecteur des commandes admissibles $v_{adm}$. Selon l'invention, le vecteur des commandes admissibles $v_{adm}$ peut comprendre le vecteur des couples du moteur thermique admissibles $T_{eng\_v}$.

En outre, le vecteur des commandes admissibles $v_{adm}$ comprend le vecteur des états de la chaîne cinématique admissibles $ECC_v$.

2) Construction du modèle

Lors de cette étape, on construit un modèle du système de propulsion hybride. Le modèle de propulsion hybride est représentatif de la chaîne cinématique du système de propulsion. Il peut prendre en compte en outre, l'état de charge de la batterie. Le modèle de propulsion hybride relie une fonction coût à une commande du système de propulsion. La fonction coût est une fonction de la consommation du système de propulsion et des émissions polluantes en sortie du système de post-traitement. Elle permet de calculer le coût associé à chaque commande possible, en termes de consommation et d'émissions de polluants (notamment NOx). Ce coût est un compromis calibrable entre les émissions polluantes à l'échappement et la consommation de carburant.

Le procédé de commande selon l'invention s'applique à l'ensemble des architectures hybrides : série, parallèle ou mixte série/parallèle. Selon l'architecture utilisée, les équations modélisant la chaîne de traction hybride sont différentes, mais le principe global reste le même. De plus, la valeur ajoutée principale de l'invention est indépendante de l'architecture hybride considérée, puisqu'il s'agit de la prise en compte des émissions polluantes à l'échappement en complément de la consommation. En conséquence, la modélisation de la chaîne de traction hybride est présentée, de manière non limitative dans le cas d'un système de propulsion hybride parallèle. L'architecture considérée est illustrée (de manière non limitative) sur la figure 4. Le système de propulsion hybride comporte un moteur thermique ICE, un générateur Stop & Start SSG (machine électrique qui permet l'arrêt et le redémarrage automatique d'un moteur thermique), un embrayage CL, une boîte de vitesse GB, et une machine électrique EM. Les roues W sont couplées au système de propulsion hybride par des moyens d'accouplement représentés de manière schématique.

Pour un système de propulsion hybride parallèle, le bilan des couples à la roue s'écrit :

$$TPT_{sp}(t) = R_1 \times T_{mot}(t) + RBV\big(ECC(t)\big) \times T_{eng}(t)$$

On a donc deux degrés de libertés pour réaliser la demande du conducteur. Par convention, on choisit ici comme commande le couple du moteur thermique $u_1 = T_{eng}(t)$ et l'état de la chaîne cinématique $u_2 = ECC(t)$. On remarque qu'à travers l'état de la chaine cinématique on commande le régime du moteur thermique $N_e(t) = f_{BV}(u_2)$, où $f_{BV}$ caractérise les rapports de réduction de la transmission.

Ces degrés de libertés sont utilisés pour minimiser un compromis calibrable (à l'aide du paramètre $\alpha$) entre la consommation $m_f$ de carburant et les émissions polluantes $m_{NOxTP}$ en sortie du système de post-traitement :

$$J = \int_{t0}^{tf} f(u_1, u_2, t) dt$$

$$f(u_1, u_2, t) = (1 - \alpha) \times \dot{m}_f(u_1, u_2, t) + \alpha \times \dot{m}_{NO_x\,TP}(u_1, u_2, t)$$

De plus, on tient compte de la dynamique de l'état de charge de la batterie $x(t) = SOC(t)$. Cet état de charge n'est d'ailleurs pas totalement libre puisque la capacité de la batterie est limitée. Au niveau du problème d'optimisation, cela revient à ajouter une contrainte d'état au problème, de manière à ce que la charge de la batterie à la fin $t_f$ de la sollicitation soit identique à l'état de charge de la batterie au début $t_0$ de la sollicitation :

$$SOC(t_f) = SOC(t_0)$$

La fonction coût du modèle peut être donnée par une fonction du type :

$$H(u_1, u_2, x, t) = f(u_1, u_2, t) + \lambda(t) \times \dot{x}(u_1, u_2, x, t)$$

*Calcul de f($u_1$,$u_2$,t)*

Pour calculer $f$ à chaque instant, on détermine l'ensemble des termes de l'équation de f.

$\alpha$ est un paramètre de calibration qui permet de régler le compromis entre la consommation et les émissions polluantes. La calibration du paramètre $\alpha$ dépend du niveau des émissions polluantes du moteur considéré. En général, on peut choisir un réglage de $\alpha$ compris entre 0.2 et 0.5, ce qui permet d'assurer une forte réduction des émissions polluantes en conservant une consommation de carburant intéressante.

Selon un mode de réalisation de l'invention, $\dot{m}_f = MAP(N_e, T_{eng})$ peut être obtenue au moyen d'une cartographie (MAP) de débit carburant, généralement issue d'essais.

Selon l'invention, les émissions de NOx en sortie de l'échappement (du système de post-traitement) sont modélisées par une équation de la forme :

$$\dot{m}_{NO_x\,TP}(u_1, u_2, x, t) = \dot{m}_{NO_x\,EO}(u_1, u_2, x, t) \times (1 - \eta_{AT}(T_{AT}))$$

Les émissions de NOx en sortie du moteur $\dot{m}_{NO_x\,EO}$ peuvent être soit calculés à partir d'un modèle, soit simplement via une cartographie issue d'essais au banc moteur.

La caractéristique de l'efficacité du système de post-traitement $\eta_{AT}$ fonction de la température $T_{AT}$ peut être issue d'essais de caractérisation. Il est également possible de tenir compte de l'influence d'autres variables, comme le débit des gaz à l'échappement.

La température du post-traitement $T_{AT}$ peut être estimée à chaque instant à partir des équations suivantes :

$$T_{AT}(t) = T_{AT}(t - \Delta t) + \Delta t \times \frac{h_1(t) + h_2(t)}{I}$$

Où le terme $h_1$ correspond aux échanges avec l'extérieur :

$$h_1(t) = k_1 \times (T_0 - T_{AT}(t - \Delta t))$$

Et où le terme $h_2$ correspond au dégagement d'enthalpie à l'échappement lié à la combustion :

$$h_2(t) = k_2 \times [\, T_{AT\,QS}(u_1(t - \Delta t), u_2(t - \Delta t)) - T_{AT}(t - \Delta t)]$$

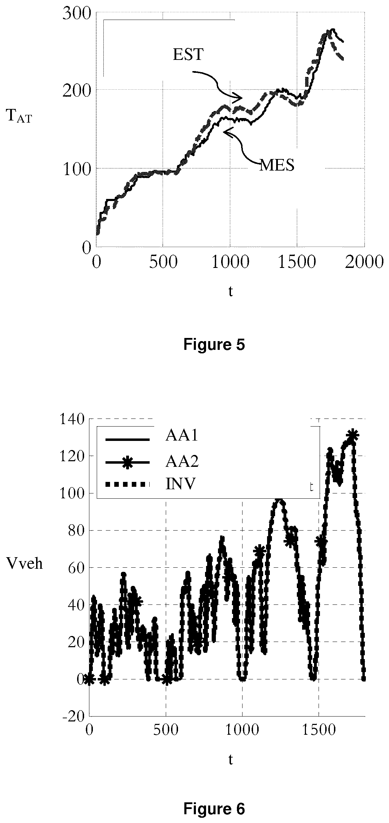

Le terme $T_{ATQS}(u_1(t - \Delta t), u_2(t - \Delta t))$ peut être obtenu au moyen d'une cartographie issue d'essais, et correspond à la température mesurée au niveau du post-traitement en régime permanent. Les valeurs des paramètres k1 et k2 peuvent être déterminées à partir d'essais sur véhicule. Ce modèle de température, bien que simplifié pour des contraintes de temps de calcul liées à l'intégration dans la stratégie de gestion d'énergie, donne une représentativité correcte, comme illustré sur la figure 5. Cette figure compare la température du système de post-traitement mesurée MES à cette même température estimée EST au moyen des équations précédentes, en fonction du temps et pour une portion du cycle de roulage WLTC (procédure d'essai mondiale harmonisée pour les voitures particulières et véhicules utilitaires légers). Sur cette figure, on observe que le modèle a pu être validé pour différentes configurations véhicules (tout thermique, Stop & Start et Full Hybrid : hybridation est totale, les deux motorisations assurent la locomotion) et pour la stratégie de supervision énergétique selon l'invention (critère d'optimisation de la consommation et des polluants en sortie du système de post-traitement).

*Calcul de $\dot{x}(u_1, u_2, x, t)$*

Le calcul de la dynamique de l'état du système qui est l'état de charge de la batterie peut être décrit dans les équations suivantes :

$$\dot{x}(u_1, u_2, x) = -\frac{I_{bat}(u_1, u_2, x)}{C_{nom}} \times 100$$

En utilisant un modèle de la batterie en tant que pile électrique, le courant batterie peut s'exprimer par une équation du type :

$$I_{bat} = \frac{OCV(x)}{2 \times DCR(x)} - \sqrt{\frac{OCV(x)^2}{4 \times DCR(x)^2} - \frac{P_{elec}(u_1, u_2)}{DCR(x)}}$$

Avec OCV et DCR respectivement la tension à vide et la résistance interne de la batterie fonction de son état de charge, ces caractéristiques peuvent être issues d'essais.
Le calcul de la puissance $P_{elec}$ de l'onduleur alimentant la machine électrique peut être donné par une équation de la forme :

$$P_{elec}(u_1, u_2, x, t) = f_{ME}(u_1, u_2)$$

Où $f_{ME}$ est une cartographie intégrant l'efficacité de la machine électrique et de l'onduleur, issue d'essais dépendants de son point de fonctionnement, et donc implicitement des commandes $u_1$ et $u_2$.

*Calcul de $\lambda(t)$*

Le calcul du multiplicateur de Lagrange peut être réalisé via l'équation suivante :

$$\lambda(t) = \lambda_{SP} + K_p(x_{SP} - x(t))$$

Où $\lambda_{SP}$ et $K_p$ sont calibrés pour contenir au mieux l'état de charge batterie dans la plage utile de celle-ci et $x_{SP}$ étant la valeur moyenne de l'état de charge batterie.
Au moyen de ces différentes équations, on peut donc estimer $f(u_1, u_2, t)$, $\dot{x}(u_1, u_2, x, t)$ et $\lambda(t)$. Ainsi, la fonction coût H du modèle de propulsion hybride est entièrement déterminée.

3) Minimisation de la fonction coût

Lors de cette étape, on minimise la fonction coût H du modèle du système de propulsion hybride. La minimisation est réalisée sur les commandes admissibles discrétisées à l'étape 1). La discrétisation permet ainsi de réduire de temps de calcul nécessaire pour la minimisation.
Cette étape consiste à minimiser le vecteur des coûts (hamiltoniens donnés par l'équation de H) associé à chaque commande admissible afin de déterminer quelle est la commande optimale.
Selon un mode de réalisation de l'invention, la minimisation est mise en œuvre au moyen du principe de minimum de Pontryagin.
Selon un mode de réalisation de l'invention, l'étape de minimisation permet de déterminer des consignes optimales de couple du moteur thermique et/ou de la machine électrique et/ou une consigne optimale de commande de la chaîne cinématique.

4) Application de la commande

L'invention permet de déterminer les consignes de couple des moyens d'entraînement du système de propulsion hybride et/ou une consigne de commande de la chaîne cinématique. En appliquant ces consignes au moteur thermique et/ou à la machine électrique et/ou à la chaîne cinématique, on obtient une diminution des émissions polluantes, et on peut limiter également la consommation de carburant.

La période de l'optimisation dynamique est adaptée aux phénomènes physiques mis en jeu au niveau du moteur, en l'occurrence la production des émissions polluantes.

Le procédé selon l'invention peut être utilisé pour les véhicules automobiles. Toutefois, il peut être utilisé dans le domaine du transport routier, le domaine des deux-roues, le domaine ferroviaire, le domaine naval, le domaine aéronautique, le domaine des aéroglisseurs, et le domaine des véhicules amphibies...

Le procédé selon l'invention est particulièrement adapté aux systèmes de propulsion « Full Hybrid », mais peut également convenir à une hybridation du type « Stop & Start » ou du type « Mild Hybrid ». Une hybridation du type « Full Hybrid » correspond à un système à motorisation hybride complète pour lequel le ou les moteurs électriques ont une puissance suffisante pour assurer à eux seuls, pendant un temps limité, la propulsion. L'hybridation du type « Stop and Start » correspond à un système de commande qui arrête le moteur thermique lorsque le véhicule est immobile au point mort et provoque son redémarrage à la première sollicitation du conducteur au moyen d'une machine électrique de faible puissance. Le type de système de propulsion « Mild Hybrid », est équipé d'une machine électrique de faible puissance et d'un système de récupération d'énergie au freinage, qui apportent un complément de puissance à bas régime ou lors d'une phase de forte accélération. Pour un système de propulsion « Mild Hybrid », la machine électrique n'est pas apte à assurer seule la traction d'un véhicule.

Variantes de réalisation

Conformément à une mise en œuvre de l'invention (pouvant être combinée avec toutes les variantes de réalisations décrites), la discrétisation peut être fonction également de l'état de charge SOC du véhicule et de la vitesse du véhicule $V_{veh}$.

Selon un premier mode de réalisation de réalisation de l'invention, on réalise un filtrage de la consigne de couple du système de propulsion hybride, les étapes du procédé étant réalisées pour la consigne filtrée. Le filtrage peut consister en un filtre anti à-coup préventif, qui filtre la demande de couple du conducteur, de manière à limiter les à-coups.

Selon une variante de ce premier mode de réalisation de l'invention, le procédé de commande détermine les consignes de couple du moteur thermique $T_{eng\_sp}$ et de la machine électrique $T_{mot\_sp}$ à partir de la consigne de couple du système de propulsion filtrée. La figure 2 illustre les étapes du procédé de commande pour cette variante de réalisation. Selon cette variante de réalisation, la discrétisation est réalisé à partir d'une valeur filtrée $TPT_{flt\_sp}$ de la consigne de couple du système de propulsion hybride. De manière non limitative, la discrétisation est fonction également de l'état de charge SOC du véhicule et de la vitesse du véhicule $V_{veh}$. L'étape de discrétisation permet de déterminer les couples du moteur thermique admissibles $T_{eng\_v}$. Les étapes de modélisation et de minimisation restent inchangées, par rapport au mode de réalisation décrit en rapport avec la figure 1. L'étape de minimisation permet de déterminer les consignes de couple du moteur thermique $T_{eng\_sp}$ et de la machine électrique $T_{mot\_sp}$.

Selon un deuxième mode de réalisation de l'invention, la commande déterminée correspond à l'état de la chaîne cinématique, par exemple au contrôle du rapport de la boîte de vitesse de la chaîne cinématique. Pour ce mode de réalisation, le principe de calcul (discrétisation, modélisation, et minimisation) est le même que pour l'optimisation du couple à la différence que le vecteur des commandes admissibles $v_{adm}$ ne se limite pas à l'ensemble des couples possibles $T_{eng\_v}$, mais contient également l'ensemble des états de la chaîne cinématique admissibles $ECC_v$. En effet, pour pouvoir déterminer quel est l'état chaîne cinématique optimal, il est préférable de déterminer au préalable quel est la répartition de couple optimale sur chacun des états de la chaine cinématique à comparer. En effet, c'est la comparaison des coûts des répartitions optimales de couples pour chaque état de la chaîne cinématique admissible qui permet de déterminer quel est l'optimum.

La figure 3 illustre les étapes du procédé selon ce deuxième mode de réalisation. La discrétisation est réalisée à partir d'une valeur non filtrée $TPT_{sp}$ de la consigne de couple du système de propulsion hybride. De manière non limitative, la discrétisation est fonction également de l'état de charge SOC du véhicule et de la vitesse du véhicule $V_{veh}$. Les étapes de modélisation et de minimisation restent inchangées, par rapport au mode de réalisation décrit en rapport avec la figure 1 (ou la figure 2), mis à part le fait que le vecteur des commandes admissibles $v_{adm}$ comporte en outre l'ensemble des états de la chaîne cinématique admissibles $ECC_v$. L'étape de minimisation permet de déterminer une consigne de commande de ladite chaîne cinématique $ECC_{sp}$, qui peut être une consigne de rapport de la boîte de vitesse de la chaîne cinématique.

Selon un troisième mode de réalisation de l'invention, on détermine une consigne de couple du moteur thermique $T_{eng\_sp}$ et/ou une consigne de couple de la machine électrique $T_{mot\_sp}$ au moyen de la consigne de couple du système de propulsion filtrée $TPT_{flt\_sp}$ et on répète les étapes 1) à 3) pour déterminer une consigne de commande de la chaîne

cinématique $ECC_{sp}$ au moyen de la consigne de couple non filtrée $TPT_{sp}$, et on applique les commandes au système de propulsion hybride. Pour ce mode de réalisation, les étapes 1) à 3) sont donc répétées deux fois : une fois avec une consigne de couple filtrée $TPT_{flt\_sp}$ et une fois avec une consigne de couple brute $TPT_{sp}$ (non filtrée). Ces deux déterminations peuvent être mises en œuvre en parallèle. L'intérêt de séparer l'optimisation du couple de celle de l'état chaine cinématique provient de l'impact des stratégies d'agrément qui modifient la demande de couple à la roue du conducteur. Ces stratégies de filtrage, tel que le filtre anti à coup préventif, filtrent la demande de couple du conducteur $TPT_{sp}$ en fonction de l'état courant de la chaine cinématique. L'optimisation de la répartition de couple est réalisée à partir de cette consigne de couple filtrée $TPT_{flt\_sp}$. Mais, pour choisir l'état chaîne cinématique optimal, il est préférable de prendre la consigne de couple brute $TPT_{sp}$. Le fait de devoir utiliser des signaux d'entrée différents justifie le fait de devoir réaliser deux optimisations en parallèle.

Selon une variante de réalisation, les répétitions des étapes 1) à 3) peuvent être mises en œuvre selon les variantes de réalisation illustrées sur les figures 2 et 3.

L'invention concerne par ailleurs un produit programme d'ordinateur téléchargeable depuis un réseau de communication et/ou enregistré sur un support lisible par ordinateur et/ou exécutable par un processeur ou un serveur. Ce programme comprend des instructions de code de programme pour la mise en œuvre du procédé tel que décrit ci-dessus, lorsque le programme est exécuté sur un ordinateur ou un contrôleur.

En outre, l'invention concerne un système de propulsion hybride d'un véhicule. Le système de propulsion hybride comporte au moins une machine électrique alimentée par un système de stockage d'énergie électrique, un moteur thermique, une chaîne cinématique et un système de post-traitement des émissions polluantes (notamment les NOx) du moteur thermique. Le système de propulsion hybride comporte des moyens de commande pour réaliser les étapes suivantes :

- acquisition d'une consigne de couple du système de propulsion $TPT_{sp}$ ;

- discrétisation d'au moins une partie de l'ensemble des commandes admissibles par le système de propulsion, permettant d'atteindre la consigne de couple du système de propulsion ;

- construction d'un modèle du système de propulsion qui relie une fonction coût à une commande du système de propulsion, la fonction coût étant une fonction de la consommation du système de propulsion et des émissions polluantes en sortie du système de post-traitement ;

- détermination d'une commande du système de propulsion par minimisation de la fonction coût pour les commandes admissibles discrétisées ; et

- application de la commande au système de propulsion.

Les moyens de commande peuvent être compatibles avec toutes les variantes du procédé de commande décrites précédemment.

De plus, l'invention concerne un véhicule comprenant un tel système de propulsion hybride. Le véhicule selon l'invention peut être un véhicule automobile. Toutefois, il peut être tout type véhicule dans le domaine du transport routier, le domaine des deux-roues, le domaine ferroviaire, le domaine naval, le domaine aéronautique, le domaine des aéroglisseurs, et le domaine des véhicules amphibies...

Exemple comparatif

Afin de montrer les avantages du procédé de commande selon l'invention. Le procédé de commande selon l'invention est comparé à des procédés de commande selon l'art antérieur. Les exemples ici proposés sont des validations expérimentales des résultats au banc moteur.

Cas d'application :

Véhicule utilitaire, masse : 2700kg
Moteur Diesel : 120kW
Moteur électrique : 50kW

Le procédé de commande a été testé et comparé au banc moteur sur le cycle WLTC qui sera le cycle d'homologation officiel à partir de la norme Euro7.

Le moyen d'essai utilisé est un banc moteur haute dynamique avec baie d'analyse des gaz pour mesure des émissions polluantes.

Le moteur utilisé présente une zone EGR étendue, standard en Euro6C. C'est une précision importante car jusqu'à présent de nombreux travaux de supervision énergétique réduisant la consommation et les émissions polluantes n'ont été validé qu'avec des moteurs Euro 5. Or un moteur Diesel Euro 5 comprend deux zones de fonctionnement relativement différentes : sur la zone, assez réduite, correspondant aux points de fonctionnement du cycle de conduite (NEDC), on utilise la recirculation des gaz brulés de l'échappement (EGR). En conséquence, cette zone présente de faibles niveaux d'oxydes d'azotes et une consommation dégradée. Sur la deuxième zone, en dehors du cycle, les réglages moteur sont optimisés sur un critère de consommation seul, et l'EGR n'est pas utilisé. Dès lors, il n'est pas étonnant que la supervision énergétique parvienne à faire varier fortement le compromis entre les émissions de $NO_x$ et la consommation de carburant.

Pour cet exemple, le procédé de commande selon l'invention est comparé à un procédé de commande selon l'art antérieur, pour lequel seule la consommation du véhicule est optimisée, et est comparé à un procédé de commande selon l'art antérieur, pour lequel la consommation et les émissions polluantes en sortie du moteur (avant post-traitement) sont optimisées.

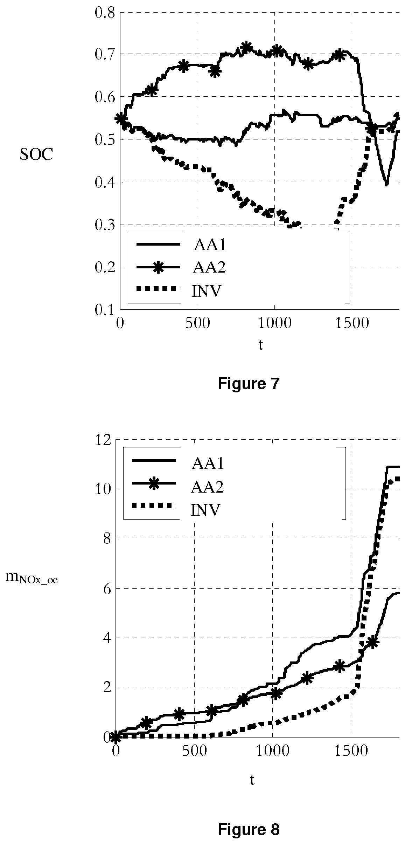

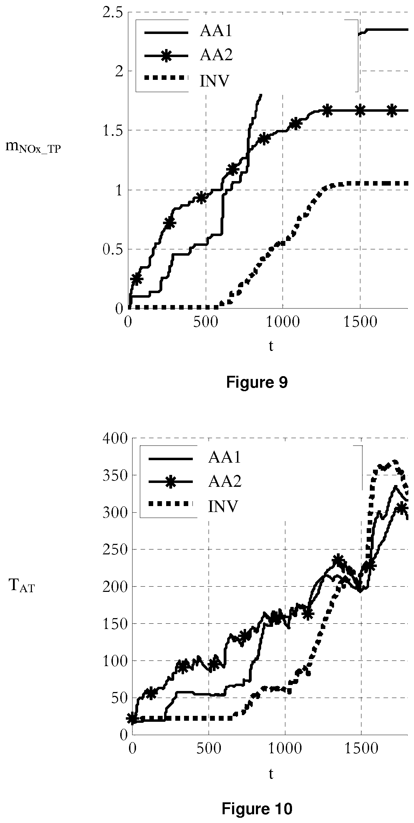

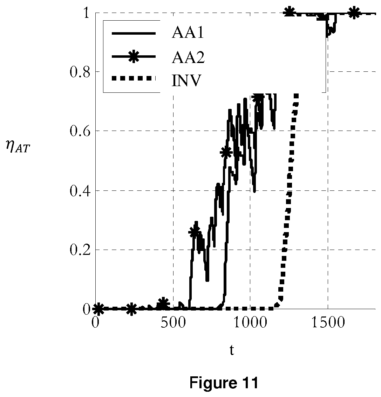

Les résultats expérimentaux sont donnés dans le tableau 1 et sur les figures 6 à 11. Le procédé de commande selon l'invention est indiqué INV, le procédé selon l'art antérieur, pour lequel seule la consommation est optimisée est noté AA1 et le procédé selon l'art antérieur, pour lequel la consommation et les émissions en sortie du moteur sont optimisés est noté AA2 La figure 6 montre les courbes de la vitesse du véhicule $V_{veh}$ en fonction du temps pour les trois procédés. La figure 7 concerne les courbes de l'état de charge SOC de la batterie pour les trois procédés. La figure 8 concerne le cumul des émissions polluantes en sortie du moteur thermique $m_{NOxEO}$ pour les trois procédés. La figure 9 illustre les courbes du cumul des émissions polluantes en sortie du système de post-traitement $m_{NOx\,TP}$ pour les trois procédés comparés. La figure 10 représente les courbes de la température du système de post-traitement $T_{AT}$ pour les trois procédés de commande comparés. La figure 11 illustre les courbes de l'efficacité du système de post-traitement $\eta_{AT}$ pour les trois procédés de commande.

Dans le tableau 1 et les figures 6 à 11, on observe que chaque procédé de commande permet bien d'obtenir le même profil de vitesse (figure 6) que les procédés de commande selon l'art antérieur AA1 et AA2. En outre, on peut observer que chaque procédé permet de minimiser le paramètre associé, puisqu'on obtient bien dans chacun des trois cas la valeur minimale du paramètre associé optimisé. Par rapport à l'état de l'art AA1, qui correspond à la stratégie optimisant la consommation de carburant, on observe qu'il est possible de réduire, au moyen de procédé de commande selon l'invention INV, les émissions d'oxyde d'azote NOx en sortie échappement de manière significative (55%) au prix d'une légère hausse de la consommation (2%). Pour ce faire, le procédé de commande selon l'invention INV réalise dans un premier temps un roulage tout électrique, illustré par la chute de l'état de charge batterie sur la figure 7. Ensuite, le moteur thermique est allumé et utilisé sur des points privilégiant la mise en action du post-traitement, qui s'avère très rapide, comme illustré sur la figure 11, et de efficace comme illustré sur la figure 10. En conséquence, le cumul des émissions de NOx à l'échappement reste faible comme illustré sur la figure 9, alors que le cumul des émissions de NOx en sortie moteur est proche de celui du procédé de l'art antérieur AA1 (figure 8).

*Tableau 1 - Exemple comparatif*

|  | Consommation de carburant [L/100km] | Oxydes d'azote sortie moteur [mg/km] | Oxydes d'azote sortie échappement [mg/km] |
|---|---|---|---|
| AA1 | **8.25** | 466 | 101 |
| AA2 | 8.57 | **249** | 72 |
| INV | 8.42 | 446 | **45** |

**Revendications**

1.  Procédé de commande d'un système de propulsion hybride, comprenant au moins une machine électrique, au moins un moteur thermique, au moins un système de stockage d'énergie électrique alimentant ladite machine électrique, une chaîne cinématique pour coupler ladite machine électrique et ledit moteur thermique, et un système de post-traitement des émissions polluantes en sortie dudit moteur thermique, dans lequel on acquiert une consigne de couple dudit système de propulsion $TPT_{sp}$, comprenant les étapes suivantes :

    a) on discrétise l'ensemble des commandes admissibles par ledit système de propulsion pour atteindre ladite consigne de couple du système de propulsion $TPT_{sp}$ au moyen d'un maillage de l'ensemble de commandes admissibles formant un vecteur des commandes admissibles comprenant un vecteur des couples du moteur thermique admissibles ;

b) on construit un modèle dudit système de propulsion qui relie une fonction coût à une commande dudit système de propulsion, ladite fonction coût étant une fonction de la consommation dudit système de propulsion et des émissions polluantes en sortie dudit système de post-traitement, ladite fonction coût du modèle du système de propulsion hybride s'écrit par une formule du type $H(u_1, u_2, x, t) = f(u_1, u_2, t) + \lambda(t) \times \dot{x}(u_1, u_2, x, t)$ avec $f(u_1, u_2, t) = (1 - \alpha) \times \dot{m}_f(u_1, u_2, t) + \alpha \times m_{NOx\,TP}(u_1, u_2, t)$ et $\dot{m}_{NOx\,TP}(u_1, u_2, x, t) = \dot{m}_{NOx\,EO}(u_1, u_2, x, t) \times (1 - \eta_{AT}(T_{AT}))$ avec

$u_1$ commande de couple dudit moteur thermique $T_{eng}$,

$u_2$ commande de ladite chaîne cinématique ECC,

$x$ état de charge dudit système de stockage d'énergie électrique,

$m_f$ consommation dudit moteur thermique,

$m_{NOxTP}$ émissions de $NO_x$ en sortie dudit système de post-traitement,

$\alpha$ variable de calibration,

$\lambda$ multiplicateur de Lagrange,

$t$ temps et

$m_{NOx\,EO}$ émissions polluantes en sortie dudit moteur thermique,

$\eta_{AT}$ rendement dudit système de post-traitement, et

$T_{AT}$ température dudit système de post-traitement ;

c) on détermine une commande dudit système de propulsion par minimisation de ladite fonction coût dudit modèle du système de propulsion pour lesdites commandes admissibles discrétisées ; et

**d) on applique** ladite commande déterminée audit système de propulsion hybride.

2. Procédé selon la revendication 1, dans lequel ladite commande est une consigne de couple dudit moteur thermique $T_{eng\_sp}$ et/ou une consigne de couple de ladite machine électrique $T_{mot\_sp}$ et/ou une consigne de commande de ladite chaîne cinématique $ECC_{sp}$.

3. Procédé selon l'une des revendications précédentes, dans lequel ladite consigne de couple dudit système de propulsion est filtrée $TPT_{flt\_sp}$.

4. Procédé selon la revendication 3, dans lequel on détermine une consigne de couple dudit moteur thermique $T_{eng\_sp}$ et/ou une consigne de couple de ladite machine électrique $T_{mot\_sp}$ au moyen de ladite consigne de couple du système de propulsion filtrée $TPT_{flt\_sp}$ et on répète les étapes a) à c) pour déterminer une consigne de commande de ladite chaîne cinématique $ECC_{sp}$ au moyen de ladite consigne de couple non filtrée $TPT_{sp}$, et on applique lesdites commandes audit système de propulsion hybride.

5. Procédé selon l'une des revendications précédentes, dans lequel ladite discrétisation prend en compte l'état de charge du système de stockage d'énergie électrique et/ou la vitesse du système de propulsion.

6. Procédé selon l'une des revendications précédentes, dans lequel ladite consommation $m_f$ dudit moteur thermique est obtenue au moyen d'une cartographie.

7. Procédé selon l'une des revendications précédentes, dans lequel lesdites émissions polluantes $m_{NOx\,EO}$ en sortie dudit moteur thermique sont déterminées par un modèle ou une cartographie.

8. Procédé selon l'une des revendications précédentes, dans lequel la température dudit système de post-traitement est estimée par une formule du type :

$$T_{AT}(t) = T_{AT}(t - \Delta t) + \Delta t \times \frac{h_1(t) + h_2(t)}{I}$$

avec :

$$h_1(t) = k_1 \times \left(T_0 - T_{AT}(t - \Delta t)\right)$$

$$h_2(t) = k_2 \times \left[ T_{AT\,QS}\left(u_1(t - \Delta t), u_2(t - \Delta t)\right) - T_{AT}(t - \Delta t)\right]$$

$T_{AT\,QS}(u_1(t - \Delta t), u_2(t - \Delta t))$ température mesurée au niveau du post-traitement en régime permanent,

$\Delta t$ pas de temps,
$k1$ résistance thermique équivalente des échanges avec l'extérieur,
$k2$ résistance thermique équivalente des échanges avec les gaz d'échappement,
et
$I$ inertie thermique du système de post-traitement.

**9.** Procédé selon l'une des revendications précédentes, dans lequel la minimisation est réalisée au moyen du principe de minimum de Pontryagin.

**10.** Produit programme d'ordinateur téléchargeable depuis un réseau de communication et/ou enregistré sur un support lisible par ordinateur et/ou exécutable par un contrôleur, comprenant des instructions de code de programme pour la mise en œuvre du procédé selon l'une quelconque des revendications précédentes, lorsque ledit programme est exécuté sur un contrôleur d'un système de propulsion hybride.

**11.** Système de propulsion hybride d'un véhicule comprenant au moins une machine électrique, au moins un moteur thermique, au moins un système de stockage d'énergie électrique alimentant ladite machine électrique et au moins un système de post-traitement des émissions polluantes dudit moteur thermique, ainsi qu'un contrôleur configuré pour mettre en œuvre le procédé de commande selon l'une des revendications 1 à 9.

**12.** Véhicule, notamment automobile, comprenant un système de propulsion hybride selon la revendication 11.

**Patentansprüche**

**1.** Verfahren zur Steuerung eines Hybridantriebssystems, das mindestens eine elektrische Maschine, mindestens einen Verbrennungsmotor, mindestens ein System zur Speicherung elektrischer Energie, das die elektrische Maschine versorgt, eine kinematische Kette, um die elektrische Maschine und den Verbrennungsmotor zu koppeln, und ein System zur Nachbehandlung der Schadstoffemissionen am Ausgang des Verbrennungsmotors beinhaltet, wobei ein Drehmomentsollwert des Antriebssystems $TPT_{sp}$ erlangt wird, beinhaltend die folgenden Schritte:

a) Diskretisieren des Satzes zulässiger Steuerungen durch das Antriebssystem, um den Drehmomentsollwert des Antriebssystems $TPT_{sp}$ zu erreichen, mit Hilfe einer Vernetzung des Satzes zulässiger Steuerungen, um so einen Vektor der zulässigen Steuerungen zu bilden, der einen Vektor der zulässigen Drehmomente des Verbrennungsmotors beinhaltet,
b) Erstellen eines Modells des Antriebssystems, das eine Kostenfunktion mit einer Steuerung des Antriebssystems verbindet, wobei die Kostenfunktion eine Funktion des Verbrauchs des Antriebssystems und der Schadstoffemissionen am Ausgang des Nachbehandlungssystems ist, wobei die Kostenfunktion des Modells des Hybridantriebssystems durch eine Formel des Typs $H(u_1, u_2, x, t) = f(u_1, u_2, t) + \lambda(t) \times \dot{x}(u_1, u_2, x, t)$ geschrieben wird, mit $f(u_1, u_2, t) = (1 - \alpha) \times \dot{m}_f(u_1, u_2, t) + \alpha \times \dot{m}_{NO_xTP}(u_1, u_2, t)$ und $\dot{m}_{NO_xTP}(u_1, U2, x, t) = \dot{m}_{NO_xEO}(u_1, U2, x, t) \times (1 - \eta_{AT}(T_{AT}))$, wobei

$u_1$ Drehmomentsteuerung des Verbrennungsmotors $T_{eng}$,
$u_2$ Steuerung der kinematischen Kette ECC,
x Ladezustand des Systems zur Speicherung elektrischer Energie,
$m_f$ Verbrauch des Verbrennungsmotors,
$m_{NO_xTP}$ NO$_x$-Emissionen am Ausgang des Nachbehandlungssystems,
$\alpha$ Kalibrierungsvariable,
A Lagrange-Multiplikator,
$t$ Zeit und
$m_{NO_xEO}$ Schadstoffemissionen am Ausgang des Verbrennungsmotors,
$\eta_{AT}$ Wirkungsgrad des Nachbehandlungssystems und
$T_{AT}$ Temperatur des Nachbehandlungssystems;

c) Bestimmen einer Steuerung des Antriebssystems durch Minimierung der Kostenfunktion des Modells des Antriebssystems für die diskretisierten zulässigen Steuerungen; und
d) Anwenden der bestimmten Steuerung auf das Hybridantriebssystem.

**2.** Verfahren nach Anspruch 1, wobei die Steuerung ein Drehmomentsollwert des Verbrennungsmotors $T_{eng\_sp}$ und/oder ein Drehmomentsollwert der elektrischen Maschine $T_{mot\_sp}$ und/oder ein Steuerungssollwert der kinematischen Kette $ECC_{sp}$ ist.

**3.** Verfahren nach einem der vorhergehenden Ansprüche, wobei der Drehmomentsollwert des Antriebssystems gefiltert wird, $TPT_{flt\_sp}$.

**4.** Verfahren nach Anspruch 3, wobei ein Drehmomentsollwert des Verbrennungsmotors $T_{eng\_sp}$ und/oder ein Drehmomentsollwert der elektrischen Maschine $T_{mot\_sp}$ mit Hilfe des gefilterten Drehmomentsollwerts des Antriebssystems $TPT_{flt\_sp}$ bestimmt wird und die Schritte a) bis c) wiederholt werden, um einen Steuerungssollwert der kinematischen Kette $ECC_{sp}$ mit Hilfe des nicht gefilterten Drehmomentsollwerts $TPT_{sp}$ zu bestimmen, und die Steuerungen auf das Hybridantriebssystem angewendet werden.

**5.** Verfahren nach einem der vorhergehenden Ansprüche, wobei die Diskretisierung den Ladezustand des Systems zur Speicherung elektrischer Energie und/oder die Geschwindigkeit des Antriebssystems berücksichtigt.

**6.** Verfahren nach einem der vorhergehenden Ansprüche, wobei der Verbrauch $m_f$ des Verbrennungsmotors mit Hilfe einer Kartographie erhalten wird.

**7.** Verfahren nach einem der vorhergehenden Ansprüche, wobei die Schadstoffemissionen $m_{NOxEO}$ am Ausgang des Verbrennungsmotors durch ein Modell oder eine Kartographie bestimmt werden.

**8.** Verfahren nach einem der vorhergehenden Ansprüche, wobei die Temperatur des Nachbehandlungssystems durch eine Formel folgenden Typs geschätzt wird:

$$T_{AT}(t) = T_{AT}(t - \Delta t) + \Delta t \times \frac{h_1(t) + h_2(t)}{I}$$

mit:

$$h_1(t) = k_1 \times (T_0 - T_{AT}(t - \Delta t))$$

$$h_2(t) = k_2 \times [T_{AT\ QS}(u_1(t - \Delta t),$$

$$u_2(t - \Delta t)) - T_{AT}(t - \Delta t)]$$

$$T_{AT\ QS}(u_1(t - \Delta t), u_2(t - \Delta t))$$

bei der Nachbehandlung im stationären Betrieb gemessene Temperatur,

$\Delta t$ Zeitschritt,
$k1$ äquivalenter Wärmewiderstand der Austausche mit außen,
$k2$ äquivalenter Wärmewiderstand der Austausche mit den Abgasen, und
$I$ Wärmeträgheit des Nachbehandlungssystems.

**9.** Verfahren nach einem der vorhergehenden Ansprüche, wobei die Minimierung mit Hilfe des Minimumprinzips von Pontryagin durchgeführt wird.

**10.** Computerprogrammprodukt, das aus einem Kommunikationsnetzwerk heruntergeladen werden kann und/oder auf einem computerlesbaren Medium aufgezeichnet ist und/oder durch einen Controller ausführbar ist und das Programmcodeanweisungen beinhaltet, die bei Ausführung des Programms auf einem Controller eines Hybridantriebssystems das Verfahren nach einem der vorhergehenden Ansprüche umsetzen.

**11.** Hybridantriebssystem eines Fahrzeugs, das mindestens eine elektrische Maschine, mindestens einen Verbrennungsmotor, mindestens ein System zur Speicherung elektrischer Energie, das die elektrische Maschine versorgt, und mindestens ein System zur Nachbehandlung der Schadstoffemissionen des Verbrennungsmotors sowie einen Controller beinhaltet, der dazu konfiguriert ist, das Steuerungsverfahren nach einem der Ansprüche 1 bis 9 umzusetzen.

12. Fahrzeug, insbesondere Kraftfahrzeug, das ein Hybridantriebssystem nach Anspruch 11 beinhaltet.

**Claims**

1. Method for controlling a hybrid propulsion system, comprising at least one electric machine, at least one combustion engine, at least one system for storing electric energy powering said electric machine, a kinematic chain for coupling said electric machine and said combustion engine, and a system for after-treatment of polluting emissions output from said combustion engine, wherein a torque setpoint $TPT_{sp}$ is obtained for said propulsion system, this comprising the following steps:

   a) the set of commands acceptable to said propulsion system is discretized, with a view to achieving said torque setpoint $TPT_{SP}$ of the propulsion system, by generating a mesh of the set of acceptable commands forming a vector of acceptable commands containing a vector of torques acceptable to the combustion engine;
   b) a model of said propulsion system is constructed, which model relates a cost function to a command applied to said propulsion system, said cost function being a function of the consumption of said propulsion system and of the polluting emissions output from said after-treatment system, said cost function of the model of the hybrid propulsion system being expressed by a formula of the following type $H(u_1, u_2, x, t) = f(u_1, u_2, t) + A(t) \times \dot{x}(u_1, u_2, x, t)$ with $f(u_1, u_2, t) = (1 - \alpha) \times \dot{m}_f(u_1, u_2, t) + \alpha \times \dot{m}_{NOxTP}(u_1, u_2, t)$ and $\dot{m}_{NOxTP}(u_1, u_2, x, t) = \dot{m}_{NOxEO}(u_1, u_2, x, t) \times (1 - \eta_{AT}(T_{AT}))$ with

      $u_1$ the torque command $T_{eng}$ applied to said combustion engine,
      $u_2$ the command applied to said kinematic chain ECC,
      x the state of charge of said system for storing electric energy,
      $m_f$ the consumption of said combustion engine,
      $m_{NOxTP}$ the $NO_x$ emissions output from said after-treatment system,
      $\alpha$ a calibration variable,
      A the Lagrange multiplier,
      $t$ time, and
      $m_{NOxEO}$ the polluting emissions output from said combustion engine,
      $\eta_{AT}$ the efficiency of said after-treatment system, and $T_{AT}$ the temperature of said after-treatment system;

   c) a command to be given to said propulsion system is determined by minimizing said cost function of said model of the propulsion system in light of said discretized acceptable commands; and
   d) said determined command is applied to said hybrid propulsion system.

2. Method according to Claim 1, wherein said command is a torque setpoint $T_{eng\_sp}$ of said combustion engine and/or a torque setpoint $T_{mot\_sp}$ of said electric machine and/or a command setpoint $ECC_{sp}$ of said kinematic chain.

3. Method according to any of the preceding claims, wherein said torque setpoint of said propulsion system is a filtered torque setpoint $TPT_{flt\_sp}$.

4. Method according to Claim 3, wherein a torque setpoint $T_{eng\_sp}$ of said combustion engine and/or a torque setpoint $T_{mot\_sp}$ of said electric machine are determined by means of said filtered torque setpoint $TPT_{flt\_sp}$ of the propulsion system and steps a) to c) are repeated to determine a command setpoint $ECC_{sp}$ of said kinematic chain by means of said unfiltered torque setpoint $TPT_{sp}$, and said commands are applied to said hybrid propulsion system.

5. Method according to any of the preceding claims, wherein said discretization takes into account the state of charge of the system for storing electric energy and/or the speed of the propulsion system.

6. Method according to any of the preceding claims, wherein said consumption $m_f$ of said combustion engine is obtained by means of a map.

7. Method according to any of the preceding claims, wherein said polluting emissions $m_{NOxEO}$ output from said combustion engine are determined by a model or a map.

8. Method according to any of the preceding claims, wherein the temperature of said after-treatment system is estimated by means of a formula of the following type:

$$T_{AT}(t) = T_{AT}(t - \Delta t) + \Delta t \times \frac{h_1(t) + h_2(t)}{I}$$

with:

$$h_1(t) = k_1 \times (T_0 - T_{AT}(t - \Delta t))$$

$$h_2(t) = k_2 \times [T_{AT\ QS}(u_1(t - \Delta t),$$

$$u_2(t - \Delta t)) - T_{AT}(t - \Delta t)]$$

$$T_{AT\ QS}(u_1(t - \Delta t), u_2(t - \Delta t))$$

the temperature measured in the after-treatment in the steady state,

$\Delta t$ a time increment,
$k1$ the equivalent thermal resistance of exchanges with the exterior,
$k2$ the equivalent thermal resistance of exchanges with the exhaust gases, and
$I$ the thermal inertia of the after-treatment system.

9. Method according to any of the preceding claims, wherein the minimization is carried out by means of Pontryagin's minimum principle.

10. Computer program product that is downloadable from a communication network and/or recorded on a medium that is readable by computer and/or executable by a controller, comprising program code instructions for implementing the method according to any of the preceding claims, when said program is executed on a controller of a hybrid propulsion system.

11. Hybrid propulsion system of a vehicle comprising at least one electric machine, at least one combustion engine, at least one system for storing electric energy powering said electric machine and at least one system for after-treatment of polluting emissions of said combustion engine, and a controller configured to implement the control method according to any of Claims 1 to 9.

12. Vehicle, in particular a motor vehicle, comprising a hybrid propulsion system according to Claim 11.

**Figure 1**

**Figure 2**

**Figure 3**

**Figure 4**

Figure 5

Figure 6

**Figure 7**

**Figure 8**

Figure 9

Figure 10

**Figure 11**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2982824
- US 20130131956 A
- GB 2483371 A
- EP 2055585 A2
- US 2013184913 A1

**Littérature non-brevet citée dans la description**

- **D. AMBUHL** ; **A. SCIARRETTA** ; **C. ONDER** ; **L. GUZZELLA** ; **S. STERZING** ; **K. MANN** ; **D. KRAFT** ; **M. KÜSELL**. A causal operation strategy for hybrid electric vehicles based on optimal control theory. *Proceedings of the 4th Symposium on Hybrid Vehicles and Energy Management*, 2007
- **N. LINDENKAMP** ; **C.-P. STÖBER-SCHMIDT** ; **P. EILTS**. Strategies for Reducing NOx and Particulate Matter Emissions in Diesel Hybrid Electric Vehicles. *SAE Paper*, 2009
- **A. SCIARRETTA** ; **L. GUZZELLA**. Control of hybrid electric vehicles. Optimal energy-management strategies. *Control Systems Magazine*, 02 April 2007, vol. 27, 60-70
- **R. CIPOLLONE** ; **A. SCIARRETTA**. Analysis of the potential performance of a combined hybrid vehicle with optimal supervisory control. *Proc. of the IEEE International Conference on Control Applications, Munich, Germany*, 04 October 2006
- **J. LIU** ; **H. PENG**. Control optimization for a power-split hybrid vehicle. *Proc. of the American Control Conference*, 2006
- **O. GRONDIN** ; **L.THIBAULT** ; **C. QUEREL**. Transient Torque Control of a Diesel Hybrid Powertrain for NOx limitation, Engine and Powertrain Control. *and Modeling*, 2012, vol. 3
- **A. CHASSE** ; **G. CORDE** ; **A. DEL MASTRO** ; **F. PEREZ**. Online optimal control of a parallel hybrid with after-treatment constraint integration. *Proceedings of the IEEE Vehicle Power and Propulsion Conference*, 2010